**Europäisches Patentamt**

**European Patent Office**

**Office européen des brevets**

(19)

(11) **EP 1 475 985 A2**

(12) **EUROPEAN PATENT APPLICATION**

(43) Date of publication:
**10.11.2004 Bulletin 2004/46**

(51) Int Cl.⁷: $H04Q\ 7/38$

(21) Application number: **04002957.1**

(22) Date of filing: **10.02.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **09.05.2003 KR 2003029382**

(71) Applicants:
  • **Samsung Electronics Co., Ltd.**
    **Suwon-si, Gyeonggi-do (KR)**
  • **Yonsei University**
    **Seoul (KR)**

(72) Inventors:
  • **Kim, Young-Yong**
    **Seodaemun-gu Seoul (KR)**
  • **Park, Won-Hyoung**
    **Yeongtong-gu Suwon-si Gyeonggi-do (KR)**
  • **Yun, Sang-Boh**
    **Yeongtong-gu Suwon-si Gyeonggi-do (KR)**

(74) Representative: **Grünecker, Kinkeldey,
Stockmair & Schwanhäusser Anwaltssozietät
Maximilianstrasse 58
80538 München (DE)**

(54) **Traffic scheduling apparatus and method for a base station in a mobile communication system**

(57)     Disclosed herein is a traffic scheduling apparatus and method for a base station in a mobile communication system to transmit real-time and non-real-time data streams having different QoS (Quality of Service) that are requested to be transmitted to a particular mobile station. A delay adjuster is provided for determining transmission order so that the real-time traffic is transmitted preferentially over the non-real-time traffic. Also provided are a transmission buffer for receiving and storing the real-time and non-real-time data streams output in the transmission order determined by the delay adjuster, and a rate adjuster for calculating assigned power of a time slot serving as a transmission unit for transmitting a predetermined amount of traffic stored in the transmission buffer, changing the transmission order of the data streams according to available time slot power, and packing the data streams in the time slot according to the changed transmission order.

FIG.2

**EP 1 475 985 A2**

**Description**

**PRIORITY**

This application claims priority under 35 U.S.C. § 119 to an application entitled "Traffic Scheduling Apparatus and Method for a Base Station in a Mobile Communication System" filed in the Korean Intellectual Property Office on May 9, 2003 and assigned Serial No. 2003-29382, the contents of which are incorporated herein by reference.

**BACKGROUND OF THE INVENTION**

1. Field of the Invention

The present invention relates generally to a traffic transmission apparatus and method for a base station in a mobile communication system, and in particular, to a scheduling apparatus and method for determining transmission order of a transmission data stream in a base station of a mobile communication system.

2. Description of the Related Art

In general, a mobile communication system may be classified as a synchronous code division multiple access (hereinafter referred to as "CDMA") system or an asynchronous universal mobile telecommunication service (hereinafter referred to as "UMTS") system.

The synchronous CDMA mobile communication system is sub-classified into systems that chiefly support real-time data streams, such as voice data, systems that support only non-real-time data streams, such as low-speed packet data (of, for example, 14.4Kbps and less) or high-speed packet data, and systems that support both the packet data and voice data.

The classification of the systems is caused by an increase in users' demands for packet data transmission service and the rapid progress of technology. Therefore, mobile communication systems show a tendency to evolve from systems supporting voice service into systems supporting high-speed packet data service. A 1xEV-DO (Evolution Data Only) mobile communication system supports a high-speed packet data service. However, the 1xEV-DO system is disadvantageous in that it does not support voice service. Therefore, a 1xEV-DV (Evolution Data and Voice) system has been proposed as a mobile communication system that can support the existing voice service as well as the high-speed packet data service.

In the 1xEV-DV system, since both voice and non-real-time data are provided, priority between the two services is determined before transmission. The priority is determined by considering QoS (Quality of Service) of the respective services, so that the voice requiring a higher transmission rate is preferentially serviced rather than the non-real-time data.

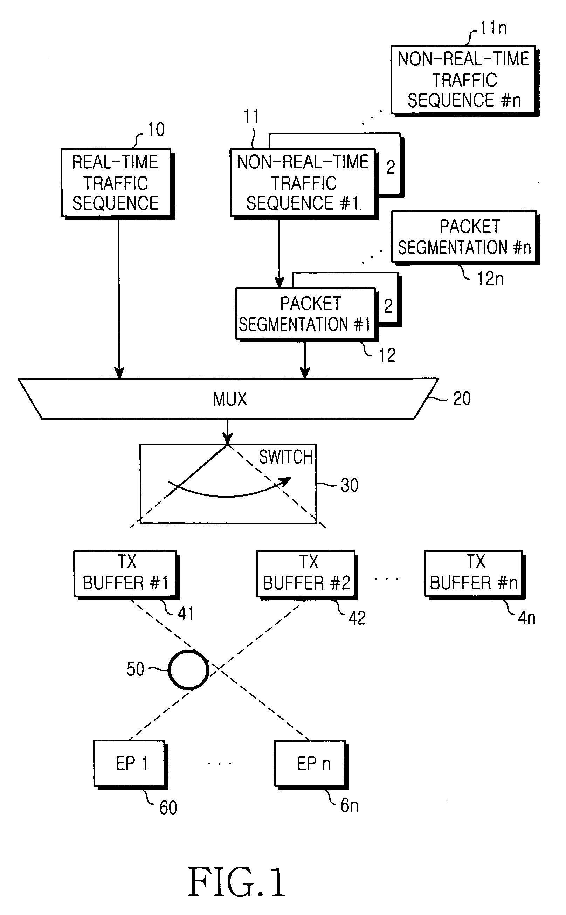

FIG. 1 is a block diagram illustrating a scheduling apparatus. A scheduling method in the 1xEV-DV system will be described in detail with reference to FIG. 1. It will be assumed that a scheduling process of FIG. 1 is performed in a base station.

If it is assumed that the number of mobile stations existing in a cell is K, a base station has a plurality of transmitters for transmitting data streams to K mobile stations. The transmitters are mapped to the mobile stations on a one-to-one basis. Each mobile station measures power of a pilot signal from the base station, and then informs the base station of its available data rate. The base station then determines a forward traffic rate by considering the data rate reported by the mobile station, and transmits data streams at the determined traffic rate.

When data streams requested to be transmitted to a specific mobile station arrive at the base station, each of the data streams is made up in the form of data streams divided according to classes requiring different QoS in a particular application service. When the data streams made up in this way are provided from an upper layer via a data link, they are processed in different ways according to their traffic type.

Referring to FIG. 1, a real-time traffic sequence 10 is directly applied to a multiplexer 20. Though only one real-time traffic sequence is shown in FIG. 1, the number of real-time traffic sequences is variable. A plurality of non-real-time traffic sequences 11 to 11n divided according to classes requiring different QoS are segmented in packet segmentation sections 12 to 12n, respectively. The packet segmentation section 12 corresponds to an RLP (Radio Link Protocol) layer, and one or more RLP instances are matched to each traffic sequence. That is, each RLP instance becomes a logical channel that can be determined according to a class of an application service stream. In the RLP layer, a plurality of logical channels can be formed for each class of the application service. The RLP instance provides a sequence number management function and a segmentation function for the data transmitted over each logical channel.

The multiplexer 20 receives the real-time traffic 10 and the non-real-time data streams output from the packet segmentation sections 12 to 12n, and multiplexes the received data streams by a particular criterion. A detailed description of the multiplexing process will not be provided, for simplicity.

The multiplexer 20 determines transmission order according to priority of the received real-time/non-real-time data streams, and then selectively provides corresponding traffic to one of a plurality of transmission buffers 41 to 4n. A switch 30, an element for embodying the selective traffic providing, switches the traffic output from the multiplexer 20 to a corresponding transmission buffer according to a type of the traffic. The transmission buffers 41 to 4n delay the traffic output from the multiplexer 20 for a predetermined time, and can be separately assigned to properly handle services requiring different QoS. It will be assumed in FIG. 1 that a first transmission buffer 41 buffers real-time traffic which is sensitive to delay, while second transmission buffers 42 to 4n store non-real-time traffic which is less sensitive to delay.

A scheduler 50 gives priority to the real-time traffic output from the first transmission buffer 41 among the data streams from the first transmission buffer 41 and the second transmission buffers 42 to 4n, and transmits the real-time traffic preferentially over the non-real-time data streams output from the second transmission buffers 42 to 4n. The real-time traffic is mapped to a transmission slot in the form of a first encoding packet (EP1) 60 and the non-real-time traffic is mapped to a transmission slot in the form of second encoding packets (EPn) 6n, before being transmitted to a receiver.

In the conventional 1xEV-DV system, the scheduler 50 preferentially services real-time voice data streams by preferential buffer switching. That is, since the voice traffic which is sensitive to delay is serviced preferentially over the non-real-time data traffic, it is possible to match a delay bound determined according to required QoS of traffic.

However, in some cases, a bandwidth assigned to non-real-time traffic is much narrower than a bandwidth assigned to real-time traffic, thus wasting a bandwidth of a channel when the real-time traffic is serviced. In addition, specific power is applied even to a bandwidth on which no information is carried, causing interference to other mobile stations.

## SUMMARY OF THE INVENTION

It is, therefore, an object of the present invention to provide a traffic scheduling apparatus and method for transmitting data streams having different qualities according to their QoS in a base station for a mobile communication system.

It is another object of the present invention to provide a traffic scheduling apparatus and method for securing quality of real-time traffic which is sensitive to delay in a base station for a mobile communication system.

It is a further object of the present invention to provide a traffic scheduling apparatus and method for providing a high data rate during a service of data streams having different QoS in a base station for a mobile communication system.

It is yet another object of the present invention to provide a traffic scheduling apparatus and method for reducing interference due to transmission of a bandwidth in a base station for a mobile communication system.

To achieve the above and other objects, the invention provides a traffic scheduling apparatus for a base station in a mobile communication system, for transmitting real-time or non-real-time data streams having different QoS (Quality of Service), requested to be transmitted to a particular mobile station. The apparatus comprises a delay adjuster for determining transmission order so that the real-time traffic is transmitted preferentially over the non-real-time traffic; a transmission buffer for receiving and storing the real-time or non-real-time data streams output in the transmission order determined by the delay adjuster; and a rate adjuster for calculating assigned power of a time slot serving as a transmission unit for transmitting a predetermined amount of traffic stored in the transmission buffer, changing transmission order of the data streams according to available time slot power, and packing the data streams in the time slot according to the changed transmission order.

To achieve the above and other objects, the invention provides a traffic scheduling method for a base station in a mobile communication system, for transmitting real-time or non-real-time data streams having different QoS (Quality of Service), requested to be transmitted to a particular mobile station. The method comprises the steps of determining transmission order so that the real-time traffic is transmitted preferentially over the non-real-time traffic; and calculating assigned power of a time slot serving as a transmission unit for transmitting a predetermined amount of the transmission order-determined traffic, changing transmission order of the traffic according to available time slot power, and packing the data streams in the time slot according to the changed transmission order.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram illustrating a structure of a conventional scheduling apparatus for a base station in a mobile communication system;

FIG. 2 is a block diagram illustrating a structure of a traffic scheduling apparatus for a base station in a mobile communication system according to an embodiment of the present invention; and

FIG. 3 is a flowchart illustrating an operation of a traffic scheduler in a base station of a mobile communication system according to an embodiment of the present invention.

## DETAILED DESCRIPTION OF THE PREFERRED EMBODIMENTS

Several preferred embodiments of the present invention will now be described in detail with reference to the annexed drawings. In the following description, a detailed description of known functions and configurations incorporated herein has been omitted for conciseness.

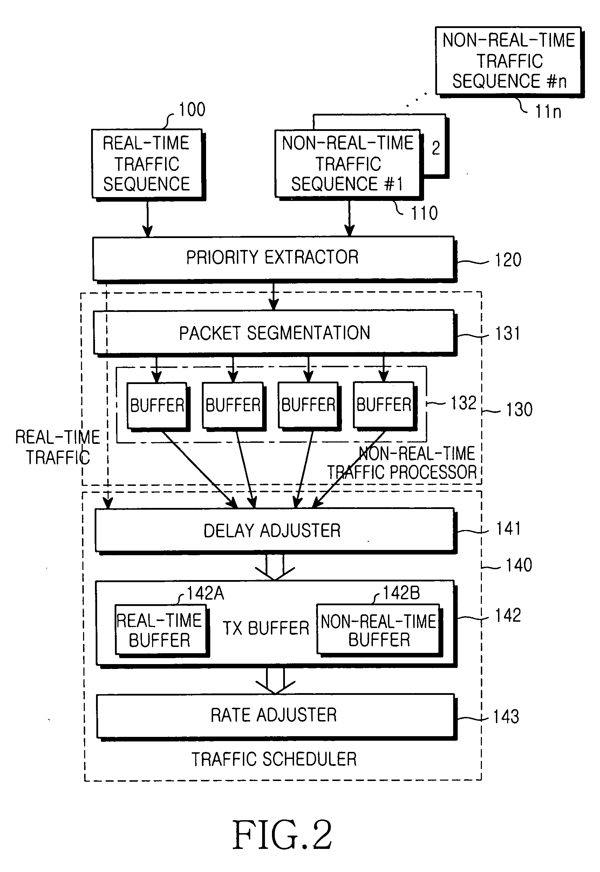

FIG. 2 is a block diagram illustrating a structure of a traffic scheduling apparatus for a base station in a mobile communication system according to an embodiment of the present invention. A structure for processing data streams in a base station upon arrival of real-time/non-real-time data streams requested to be transmitted to a mobile station will be described herein below with reference to FIG. 2.

When data streams arrive at a base station, each of the data streams is made up in the form of data streams divided according to classes requiring different QoS in a particular application service. When the data streams made up in this way are provided from an upper layer via a data link, they are processed in different ways according to their traffic types. Priority information of traffic is written in a TOS (Type of Service) field of a header of the traffic.

A priority extractor 120 checks priority of traffic provided from an upper layer via a link layer, using information marked in the TOS field of a header of the traffic. Priority information extracted by the priority extractor 120 is used by a delay adjuster 141 which will be described later.

A non-real-time traffic processor 130 is comprised of a packet segmentation section 131 and a plurality of buffers 132. The packet segmentation section 131 calculates a maximum transmission capacity of each slot according to information of a radio channel, and segments non-real-time traffic in a predetermined ratio of the maximum transmission capacity of each slot. The packet segmentation section 131 corresponds to an RLP layer, and is identical to that described in regard to FIG. 1.

The packet segmentation section 131 can vary the size of the RLP layer of the non-real-time traffic according to a radio channel feedback signal received from the mobile station, and in the following description, the RLP layer will be referred to as an adaptive RLP layer.

A traffic scheduler 140 is comprised of the delay adjuster 141, a transmission buffer 142, and a rate adjuster 143. An operation of the traffic scheduler 140 includes two steps: a first step of adjusting delay, and a second step of packing data streams so as to increase a data rate.

First Step

The delay adjuster 141 adjusts delay values for respective data streams so that real-time traffic is preferentially transmitted and then non-real-time data streams are transmitted later. Transmission order (or service order) of the non-real-time data streams is determined by a transmission buffer 142 in accordance with Equation (1) and Equation (2) below. Determining the transmission order is referred to as "scheduling."

Equation (1) is provided to calculate a ratio of real-time traffic to the total traffic arrived at each session.

$$\alpha = \frac{\text{RT rate} \times \text{\# of session}}{\text{RT rate} \times \text{\# of session} + \text{NRT rate} \times \text{\# of session}} \tag{1}$$

In Equation (1), 'RT rate' denotes an arrival rate of real-time traffic, 'NRT rate' denotes an arrival rate of non-real-time traffic, and '# of session' denotes a number of each session. According to Equation (1), if an amount of the non-real-time traffic is increased, $\alpha$ becomes much less than 1 ($\alpha \ll 1$). If $\alpha \ll 1$, it means that most of current transmission traffic is non-real-time traffic. In contrast, if an amount of real-time traffic is increased, $\alpha$ is less than 1 but approaches 1 ($\alpha \cong 1$). If $\alpha$ approaches 1, it means that most of the current transmission traffic is real-time traffic.

Equation (2) is provided to calculate a finish time of $k^{th}$ traffic from an $i^{th}$ user by using $\alpha$ calculated through Equation (1). The term "finish time" refers to a possible delay time required according to the QoS of traffic. That is, a finish time of non-real-time traffic which is not sensitive to delay can become relatively longer than a finish time of real-time traffic which is sensitive to delay.

$$FT_i^k = FT_i^{k-1} * \left( \frac{priority \times \alpha + 1}{priority + 1} \right) + \frac{L_i^k}{\Phi_i}$$

$$. . . . . (2)$$

In Equation (2), $FT_i^k$ represents a finish time of $k^{th}$ traffic from an $i^{th}$ user, $L_i^k$ represents a traffic length, and $\Phi_i$ represents a weight. In addition,

$$\frac{L_i^k}{\Phi_i}$$

represents a ratio of a length of $k^{th}$ traffic to a weight determined for each user, and the

$$\frac{L_i^k}{\Phi_i}$$

when added to a finish time of $(k-1)^{th}$ traffic, becomes a factor for determining a finish time of $k^{th}$ traffic. However, Equation (2) includes the $\alpha$ value.

Therefore, at a finish time of $(k-1)^{th}$ traffic, a reflection rate for $k^{th}$ traffic depends upon an $\alpha$ value calculated by Equation (1). That is, if an amount of non-real-time traffic is increased so $\alpha$ become much less than 1 ($\alpha \ll 1$), a reflection ratio of a finish time of previous traffic to a finish time of current traffic is decreased to preferentially service real-time traffic. In contrast, if an amount of real-time traffic is increased so that $\alpha$ becomes less than 1 but approaches 1 ($\alpha \cong 1$), a reflection ratio of a finish time of previous traffic to a finish time of current traffic is almost maintained. Thus, the real-time traffic is continuously preferentially serviced. That is, scheduling priority depends upon a value of $\alpha$ corresponds to the current real-time and non-real-time data streams level.

Further, in Equation (2), 'priority' represents priority information of a particular data packet, and is extracted by the priority extractor 120 and then applied to the delay adjuster 141. That is, the priority information is extracted as a value of the TOS field in an IP (Internet Protocol) header, and its value can become a value determined by converting a 2-bit value into a decimal number.

The transmission buffer 142 sequentially stores real-time and non-real-time data streams time-scheduled in the delay adjuster 141, and outputs the stored data streams according to a traffic transmission request signal from the rate adjuster 143. The transmission buffer 142 can be comprised of two buffers: a real-time buffer 142A for buffering real-time traffic and a non-real-time buffer 142B for buffering non-real-time traffic. The real-time buffer 142A and the non-real-time buffer 142B include a real-time traffic pointer (not shown) and a non-real-time traffic pointer (not shown), respectively, and maintain their pointers until a preferential time slot enable signal is received according to a control signal from the rate adjuster 143.

Second Step

The rate adjuster 143 packs data streams in a time slot by varying the order of data streams received from the transmission buffer 142 according to power capacity of each time slot. For scheduling, the rate adjuster 143 determines packing order of data streams according to the assigned power by using Equation (3), Equation (4) and Equation (5) below. The rate adjuster 143 calculates assigned power of each traffic by using Equation (4) which is derived from Equation (3).

Equation (3) indicates that a SIR (Signal-to-Interference Ratio) of traffic from an $i^{th}$ user should be larger than a predetermined value $\gamma_i$.

$$\frac{G_i P_i(t)}{\sum\limits_{j \neq i} P_j(t) + \eta_0 W} \geq \gamma_i$$

$$. . . . . (3)$$

In Equation (3), $P_i$ represents assigned power of traffic from an $i^{th}$ user, $G_i$ represents a spreading coefficient, W represents a bandwidth, and $\eta_0$ represents an AWGN (Additive White Gaussian Noise) power spectrum density. According to Equation (3), SIR is a ratio of a value determined by multiplying a spreading coefficient $G_i$ by assigned power $P_i(t)$ of traffic from an $i^{th}$ user to the sum of a value determined by a bandwidth W by an AWGN power spectrum density $\eta_0$ and a series of $P_j(t)$.

Power assigned to an $i^{th}$ user, satisfying a condition of Equation (3), is calculated by

$$P_i(t) = \frac{\eta_0 W g_i}{1 - \sum_{j=1}^{N(t)} g_j}, \quad g_i = \frac{\gamma_i}{\gamma_i + G_i}$$

$$. \; . \; . \; . \; . \; (4)$$

where $g_i$ is a power index and represents normalized power, and its value is proportional to assigned power.

Equation (5) below is provided to calculate power that is actually assigned to each slot.

$$\sum_{j=i}^{N(t)} g_i \leq 1 - \Delta, \quad \text{where } \Delta = \max_i \left( \frac{\eta_0 W g_i}{h_i p_i} \right)$$

$$. \; . \; . \; . \; (5)$$

It is noted from Equation 5 that slot capacity is limited to $1-\Delta$, and a $\Delta$ value is changed according to a condition of a radio channel. In addition, $h_i$ is a parameter that reflects a value of a time-varying radio channel, and is determined using channel information given by a pilot channel.

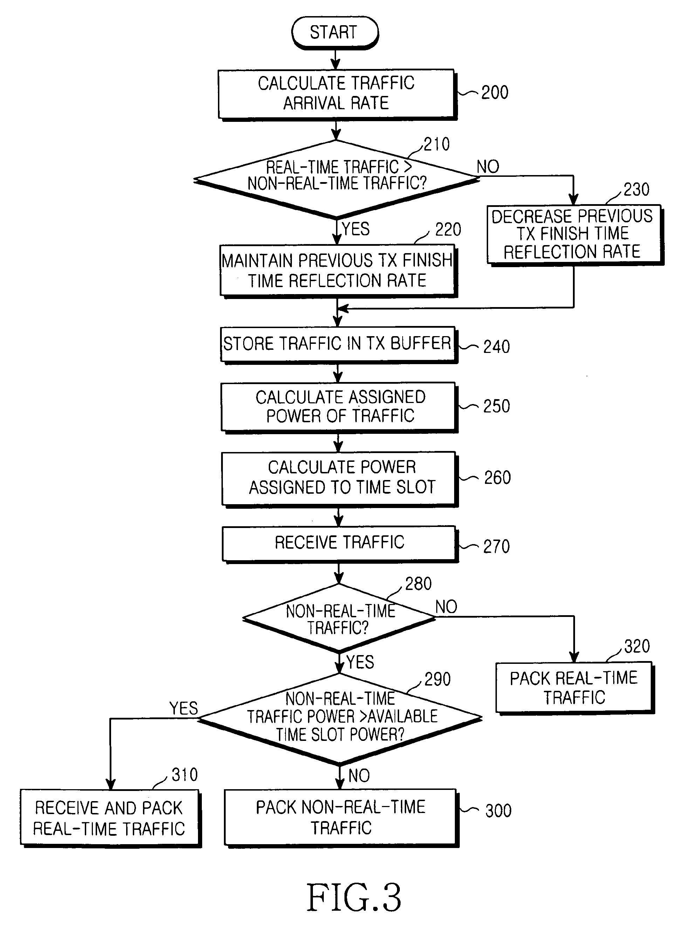

The rate adjuster 143 performs slot packing based on power information calculated by Equation (3), Equation (4) and Equation (5), and a detailed description of the packing process will be described herein below with reference to FIG. 3.

An operation of the above-stated traffic transmission apparatus in a mobile communication system will be described with reference to FIG. 2. When data streams arrive at a base station, each of the data streams is made up in the form of data streams divided according to classes requiring different QoS in a particular application service. When the data streams made up in this way are provided from an upper layer via a data link, they are processed in different ways according to their traffic types.

Referring to FIG. 2, if real-time traffic sequence 100 is transmitted from an upper layer to a data link layer, the priority extractor 120 extracts information marked in the TOS field of the IP header. The real-time traffic, having passed the priority extractor 120, is bypassed to the non-real-time traffic processor 130. However, the non-real-time traffic, having passed the priority extractor 120, is segmented in a predetermined size by the packet segmentation section 131 and then buffered in any one of the buffers 132. In order to transmit real-time traffic received on a real-time basis and non-real-time traffic received after being stored in a buffer for a predetermined time, the traffic scheduler 140 performs scheduling.

FIG. 3 is a flowchart illustrating an operation of the traffic scheduler 140 according to an embodiment of the present invention. A scheduling process will now be described in detail with reference to FIG. 3.

In step 200, the delay adjuster 141 calculates an arrival rate of received data streams according to traffic types. In step 210, the delay adjuster 141 compares a real-time traffic arrival rate with a non-real-time traffic arrival rate by using Equation (1). As a result of the comparison, if a real-time traffic arrival rate is higher than a non-real-time traffic arrival rate, the delay adjuster 141 maintains a previous transmission finish time reflection rate according to Equation (2) in step 220. However, if the real-time traffic arrival rate is lower than the non-real-time traffic arrival rate, the delay adjuster 141 decreases a previous transmission finish time reflection rate according to Equation (2) in step 230.

In step 240, the delay adjuster 141 stores the real-time and non-real-time data streams in the transmission buffer 142 at the transmission finish time determined in steps 220 and 230. The rate adjuster 143 calculates assigned power of the traffic stored in the transmission buffer 142 by using Equation (4) in step 250, and then calculates power assigned to a time slot by using Equation (5) in step 260.

The rate adjuster 143 packs the data streams in the order of being stored in the transmission buffer within an available time slot power range. If a packing request is made on non-real-time traffic assigned very high power at a part left after packing to some extent in one time slot, the traffic cannot be serviced over this time slot. This causes a considerable waste of channels, decreasing packing efficiency and transmission throughput. Therefore, in order for the non-real-time traffic to secure a maximum possible data rate at the sacrifice of slight delay, there is a demand for an algorithm for packing real-time traffic instead of non-real-time traffic that has power higher than surplus power of the slot.

When the traffic is received in step 270, the rate adjuster 143 determines in step 280 whether the received traffic is non-real-time traffic. If the received traffic is non-real-time traffic, the rate adjuster 143 determines in step 290 whether power of the received non-real-time traffic is higher than available time slot power. If it is determined in step 290 that the non-real-time traffic power is lower than or equal to the available time slot power, the rate adjuster 143 packs the received non-real-time traffic in a time slot in step 300. However, it is determined in step 290 that the non-real-time traffic power is higher than the available time slot power, the rate adjuster 143 reserves the received non-real-time traffic for the moment, and then receives real-time traffic with next priority and packs the received real-time traffic in a time slot in step 310. In this case, the reserved non-real-time traffic is stored in the transmission buffer 142 in an idle state until a preferential time slot enable signal is received, and a non-real-time traffic pointer indicating non-real-time traffic can be maintained. Meanwhile, if it is determined in step 280 that the received traffic is not non-real-time traffic, the rate adjuster 143 packs the received real-time traffic in a time slot in step 320. In this manner, the algorithm proposed by the invention can change packing priority of the data streams.

The 2-step scheduling algorithm proposed by the invention can match a delay bound by increasing transmission priority (or service priority) of real-time traffic, and can increase packing efficiency while securing a high data rate by changing priority of traffic when loose packing occurs.

As described above, the invention can match a delay bound of real-time traffic by separately adjusting a delay and a data rate and can also provide a high data rate by preventing a waste of bandwidth. In addition, it is possible to provide desired service quality by separating delay performance of real-time traffic and rate performance of non-real-time traffic.

While the invention has been shown and described with reference to a certain preferred embodiment thereof, it will be understood by those skilled in the art that various changes in form and details may be made therein without departing from the spirit and scope of the invention as defined by the appended claims.

**Claims**

1.  A traffic scheduling apparatus for a base station in a mobile communication system, for transmitting real-time traffic and non-real-time traffic having different Quality of Service to a particular mobile station, the apparatus comprising:

    a delay adjuster (141) for determining transmission order so that the real-time traffic is transmitted preferentially over the non-real-time traffic;

    a transmission buffer (142) for receiving and storing the real-time traffic and non-real-time traffic output in the transmission order determined by the delay adjuster (141); and

    a rate adjuster (143) for calculating assigned power of a time slot serving as a transmission unit for transmitting a predetermined amount of traffic stored in the transmission buffer, changing the transmission order of the traffic according to available time slot power, and packing the traffic in the time slot according to the changed transmission order.

2.  The traffic scheduling apparatus of claim 1, wherein the delay adjuster (141) is configured to determine finish time of traffic according to

$$FT_i^k = FT_i^{k-1} * \left( \frac{priority \times \alpha + 1}{priority + 1} \right) + \frac{L_i^k}{\Phi_i}$$

where $FT_i^k$ represents a finish time of $k^{th}$ traffic from an $i^{th}$ user, $L_i^k$ represents a traffic length, $\Phi_i$ represents a weight, and $\alpha$ represents a ratio of real-time traffic to the total traffic arrived at each session.

3. The traffic scheduling apparatus of claim 2, wherein the priority is a value extracted from an Internet Protocol header.

4. A traffic scheduling method for a base station in a mobile communication system, for transmitting real-time traffic and non-real-time traffic having different Quality of Service to a particular mobile station, the method comprising the steps of:

    determining transmission order so that the real-time traffic is transmitted preferentially over the non-real-time traffic; and

    calculating assigned power of a time slot serving as a transmission unit for transmitting a predetermined amount of the transmission order-determined traffic, changing the transmission order of the traffic according to available time slot power, and packing the traffic in the time slot according to the changed transmission order.

5. The traffic scheduling method of claim 4, wherein the step of determination of transmission order comprises a delay adjusting step wherein the finish time of traffic is determined according to

$$FT_i^k = FT_i^{k-1} * \left( \frac{priority \times \alpha + 1}{priority + 1} \right) + \frac{L_i^k}{\Phi_i}$$

where $FT_i^k$ represents a finish time of $k^{th}$ traffic from an $i^{th}$ user, $L_i^k$ represents a traffic length, $\Phi_i$ represents a weight, and $\alpha$ represents a ratio of real-time traffic to the total traffic arrived at each session.

FIG.1

NON-REAL-TIME
TRAFFIC
SEQUENCE #n
⌐ 11n

REAL-TIME
TRAFFIC
SEQUENCE
⌐100

NON-REAL-TIME
TRAFFIC
SEQUENCE #1
2

⌐110

PRIORITY EXTRACTOR — 120

PACKET SEGMENTATION — 131

BUFFER  BUFFER  BUFFER  BUFFER — 132 — 130

REAL-TIME
TRAFFIC

NON-REAL-TIME
TRAFFIC PROCESSOR

DELAY ADJUSTER — 141

— 140

142A
REAL-TIME
BUFFER

TX BUFFER

142B
NON-REAL-TIME
BUFFER

— 142

RATE ADJUSTER — 143

TRAFFIC SCHEDULER

FIG.2

10

FIG.3